(19) Europäisches Patentamt
European Patent Office
Office européen des brevets

(11) **EP 3 038 031 A1**

(12) **EUROPEAN PATENT APPLICATION**

(43) Date of publication:
**29.06.2016 Bulletin 2016/26**

(51) Int Cl.:
**G06Q 10/10** (2012.01)  **H04L 12/58** (2006.01)

(21) Application number: **14382563.6**

(22) Date of filing: **23.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.**
**28013 Madrid (ES)**

(72) Inventors:
• **Karoliina Hiltunen, Anna**
  **28013 Madrid (ES)**

• **Tome Torres, Maria Jose**
  **28013 Madrid (ES)**
• **Llanos Santos, David**
  **28013 Madrid (ES)**

(74) Representative: **Carlos Hernando, Borja**
**Garrigues IP, S.L.P.**
**Hermosilla, 3**
**28001 Madrid (ES)**

(54) **A mobile communications terminal and a computer implemented method and computer programs for adapting communications on a user mobile communications terminal**

(57) The terminal (100) comprises a user communications terminal interface (23) and a communications processing unit (10) configured to receive a calculated proximity score (500) including a contacts identification unit (19) configured to identify and rank a number of end users with which a first user owning the terminal (100) have maintained communications and have a calculated proximity score (500) higher than a given threshold; an activity unit (20) configured to track a communication activity, including communication messages and/or content, of said maintained communications sent/received by the mobile communications terminal (100) to/from said identified and ranked number of end users; and a compiling unit (21) configured to compile and adapt said tracked communication activity, and output on said user terminal interface (23) the compiled and adapted communication activity according to a set of outputting rules.

Fig. 1

**Description**

Field of the invention

The present invention generally relates to communication interfaces and methods. In particular, the invention relates to a mobile communications terminal and to a computer implemented method and computer programs for adapting communications on a user mobile communications terminal based on the communication characteristics and behavior of a user and its close social communication environment.

Background of the invention

Personal interests are important for a user when using a mobile device/terminal. The existing market is full of different types of mobile devices with different user and communication interfaces. It is of importance, therefore, that these different communication interfaces adapt the communication environment of a user to the communication characteristics and behavior of a close social communication environment, such as a family circle or the like.

Social relationships are built upon mutual interactions and influences between individuals of a given group. With the expansion of social networks (SNs) in the digital world, users bump into a new scenario where the ways they have to reach another person have significantly increased. At the same time, users tend to use different mechanisms to contact with the different people belonging to their network, depending on the communication purpose. While social networks generally have expanded the characteristics and purpose of close social circle/ emotional communications differ from the expanded social network communications.

Description of the Invention

An object of present invention is to increase availability and presence of a user within emotional communications close circles, hence embodiments of the present invention provide a mobile communications terminal and a method aimed at structuring the communications (e.g. messaging) and content dynamics of the user, and identifying proximity relationships of him/her within a plurality of nodes/users (family unit).

To that end, in accordance with a first aspect there is provided a mobile communications terminal, comprising a user communications terminal interface and a communications processing unit configured to receive, or obtain, a calculated proximity score. The calculated proximity score provides an estimation of the proximity a first end user owning said mobile communications terminal has with regard to other end users with which the first end user has maintained communications through communication services during a determined period of time, and is based on parameters related to the maintained communications including type of communication service used and type of communications.

In addition, the communications processing unit includes a contacts identification unit configured to identify and rank a number of end users of the other end users having a calculated proximity score higher than a given threshold; an activity unit configured to track a communication activity, including communication messages and/or content, of said maintained communications sent/received by the mobile communications terminal to/from said identified and ranked number of end users; and a compiling unit configured to compile and adapt said tracked communication activity and output on the user communication terminal interface the compiled and adapted communication activity according to a set of outputting rules.

According to an embodiment, the contacts identification unit is also configured to select as a hub node the end user of said identified and ranked number of end users positioned in the first position of said rank.

The activity unit includes calendar means linked with said set of outputting rules to arrange the adapted and compiled communication activity in a timely manner.

According to an embodiment, the communication messages include at least text messages; hence the user mobile communications terminal also includes means configured to convert the text messages into voice messages.

In accordance with another aspect, there is provided a computer implemented method for adapting communications on a user mobile communications terminal. The method comprises the obtention of the number of communications that a first end user of communication services has maintained, during a determined period of time and using said user mobile communications terminal, with each one of other end users of the communication services; and the calculation of a proximity score for each pair of end users participating in each of said maintained communications, as an estimation of the proximity of the first end user with each one of said other end users. The proximity score is based on parameters related to the communications including type of communication service used and type of communications.

The communication services may include a fixed telephone service, a mobile phone service, online services, an email service, chats and/or Internet social networks such as Facebook®, Twitter®, etc. On another hand, the type of communications may include a call, a SMS, a MMS, a chat, a videoconference, a comment or reply in a social network, an email, etc.

On contrary of the known proposals, the method further identifies and ranks, by a contacts identification unit, a number of end users of said other end users having a calculated proximity score higher than a given threshold; tracks, by an activity unit, the communication activity, including communication messages and/or content, of said maintained communications sent/received by the mobile communications terminal to/from said identified and ranked number of end users; compiles and adapts, by a compiling unit, said tracked communication activity, and outputs, on the user communications terminal interface, the compiled and adapted communication activity according to a set of outputting rules, said set of outputting rules being executed by the activity unit depending on the communication activity.

According to the invention, the set of outputting rules may comprise:

- notify a given user of the identified and ranked number of end users if no communication has been maintained between the given user and the first end user during a determined period of time (e.g. a week, three days, etc.);
- generate and play an event reminder in the calendar in case the first end user having received through the calendar an event appointment from at least one of said identified and ranked number of end users;
- notify the hub node in case its position in the rank decreases;
- notify the end users of said identified and ranked number of end users being in the second, third and fourth position of the rank;
- notify the end users of said identified and ranked number of end users whose proximity score has changed with respect to the hub node (e.g. the proximity score has decreased);
- automatically repeat the outputting of a message until a response is sent by the first end user in case said message being send and marked as 'important' by at least one of said identified and ranked number of end users.

According to an embodiment, the contacts identification unit selects as a hub node the end user of said identified and ranked number of end users which is positioned in the first position of the rank.

In addition, the set of outputting rules preferably are linked to a calendar of the activity unit to arrange the adapted and compiled communication activity in a timely manner. According to an embodiment, the activity module calculates at least a daily resume of the tracked communication activity and sends the calculated resume to the compiling unit. Then, the compiling unit may set out an alarm to all of the identified and ranked number of end users in case a communication message from the hub node is send to the first end user and a reply from the latter has not been received by the hub node within a determined period of time (e.g. three days or less).

Other aspects of the invention that are disclosed herein include software programs to perform the method embodiment steps and operations. More particularly, a computer program product is one embodiment that has a computer-readable medium including computer program instructions encoded thereon that when executed on at least one processor in a computer system causes the processor to perform the operations indicated herein as embodiments of the invention.

Brief Description of the Drawings

The previous and other advantages and features will be more fully understood from the following detailed description of embodiments, with reference to the attached drawings, which must be considered in an illustrative and non-limiting manner, in which:

Fig. 1 illustrates a generic architecture used by the present invention for calculating a proximity score according to an embodiment.

Fig. 2 illustrates a generic architecture used by the present invention for adapting communications of a user based on a calculated proximity score (e.g. as calculated in Fig. 1), for its application on the proposed mobile communications terminal.

Fig. 3 is a graph diagram illustrating an embodiment of the different steps executed for playing communication messages and/or content on the proposed user mobile communications terminal.

Fig. 4 is a graph diagram illustrating an embodiment of the different steps executed for sending by the proposed user mobile communications terminal communication messages and/or content.

Detailed Description of the Invention

The mobile communications terminal 100 provided by the teachings of present invention, according to an embodiment, is a mobile phone. However, in other embodiments, the mobile communications terminal 100 may be any hand-held device capable of communicating with other devices.

The mobile communications terminal 100 comprises a user communications terminal interface 23, such as a front-end interface, that connects with a communications processing unit 10 of the mobile communications terminal 100, to play and send messages and content in between emotional contacts (i.e. between the user owning the mobile communications terminal 100 (from now on referred as the owner) and a plurality of other users with which the owner has a close communication relationship). The user communications terminal interface 23 saves and stores communication messages and/or content as defined by a compiling unit 21 and an activity unit 20 of the processing unit 10.

The communications processing unit 10 is configured to receive a calculated proximity score 500 providing an estimation of the proximity that the owner has with regard to other end users with which the owner has maintained communications, through different communication services and during a determined period of time, and is based on parameters related to the maintained communications including type of communication service used (e.g. fixed telephone service, a mobile phone service, online services, an email service, chats and/or Internet social networks such as Facebook®, Twitter®, etc.) and type of communications (e.g. calls, SMS, MMS, chats, videoconferences, comments or replies in a social network, emails, etc. The proximity score 500 in present invention is preferably calculated according to the teachings of patent application EP-A1-2610795.

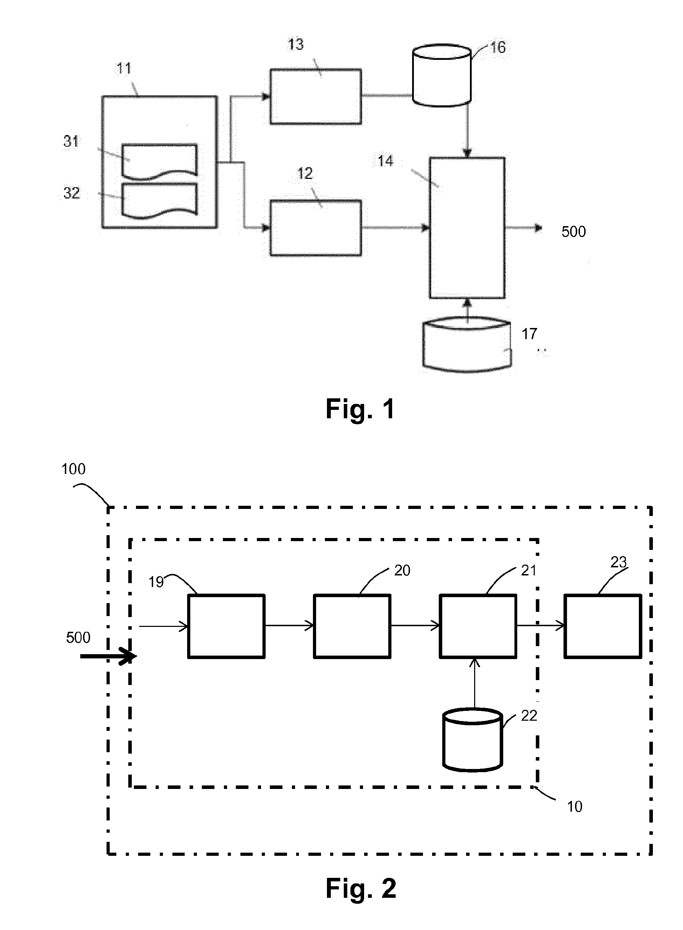

Fig. 1 shows the generic architecture that can be used, as by the teachings of patent application EP-A1-2610795, to calculate the proximity score 500. The calculated proximity score 500 is a numerical number ranged between 0 and infinite and estimates the social trust between the owner and the other end users with which the owner has maintained communications in a deterministic and tuneable way, in order to determine the family like close circle and the social closeness within them. The teachings of patent application EP-A1-2610795 are herein included by reference in the present application, however, the different modules included in Fig. 1, are also following detailed:

- Communication Sources Module 11: this module manages all raw data - structured and unstructured-provided by the different communication services. Depending on the nature of this information, the module 11 distinguishes two different types of sources: (i) CDR 31, which comes from the public switched telephone network operators, and (ii) web detail record, also called WDR 32, which comes from web human intercommunication events. The module 11 obtains raw information referred to user interactions gathered from different sources. Each communication service, no matter its nature, considers different events according to its environment (e.g. a call detail record might consider calls frequency and duration, while a web detail record would consider the number of emails exchanged between two users).

- Dyad Analyzer Module 12: this module converts the raw data collected from the aforementioned communication sources to a set of structured data that they will be called from now on as "structured dyads" -user communication pairs with a weighted numerical value corresponding to the intensity (in terms of frequency and type of event) of their interactions collected from the communication sources module. Indeed, a structured dyad is a relationship between a user A and a user B with a weight value, ranged between 0 and infinite, that depends on the type and frequency of events between user A and user B- recall that the weight of the dyad between user A and user B, does not necessarily be the same than the weight of the dyad between user B and user A. This numerical value is ranged between zero (meaning no interactions) and a positive real number. The more interactions between each pair of two users, the higher weight will the structured dyad have.

- Identity Matching Module 13: this module identifies a user behind different web identities. It analyzes all the identities from all the input sources, and applies a matching process. The module 13 looks for different user profiles belonging to a user, gathered from different information sources 16, because it is common to find a set of matching parameters such as e-mail or phone number and another set of mismatching parameters such as name, surname or address. This module 13 takes into account the context of these parameters (i.e. the information source) and decides if both profiles belong to the same user. Thus, each communication service has a predefined level of confidence depending on the way each source validates the user parameters (e.g. a source that validates the phone number by sending an SMS should have a confidence level of 10).

- Multisource Graph Builder Module 14: this module builds a social graph encompassing all previously registered dyads. A social graph is composed by a set of nodes (each node is associated to a user) and a set of weighted links depicting a proximity node score between nodes (each weighted link corresponds to a sort of communication relationship that join the two users (nodes)). To achieve such a goal, it uses a graph oriented database which loads the previously registered dyads. The social graph (including nodes and edges) is built for all possible sources within the system according to a set of aggregation rules 17. The aggregation rules 17 consider the relevance of the information gathered from the information sources as shown in the following formula:

$$Multi\ Source\ Dyad_k = \sum\nolimits_{\forall source_i} \alpha_i \cdot Dyad_k,$$

where $\alpha_i$ is a scalar value which adjusts the relevance of each dyad gathered from source $i$ concerning event k.

It has to be noted that even though in the present specification has only been described the teachings of patent application EP-A1-2610795 for calculating the proximity score 500, other processing and computing methods can also be used by the present invention without departing to the scope of protection.

Once the proximity score is calculated, the contacts identification units 19, the activity unit 20 and the compiling unit 21 of the communications processing unit 10 adapt communication environment of the owner of the mobile communications terminal 100 based on the calculated proximity score 500. Fig. 2 illustrates the application of the calculated proximity score 500 on the user mobile communications terminal 100.

The contacts identification unit 19 is responsible of identifying and ranking the number of end users having a calculated proximity score 500 higher than a given threshold. That is, the contacts identification unit 19 identifies the users (nodes) most proximate (with the highest proximity score 500) to the owner. For instance, it identifies the 10 users having a proximity score 500 greater than the given threshold.

Likewise, if a new user is identified to become more proximate to the owner, the contacts identification unit 19, suggests saving the new identified user to the ranked contacts (the identified and ranked end users). The ranked contacts identified by this unit 19 have access to management and set up of the user mobile communications terminal 100.

Furthermore, the contacts identification unit 19, may also select as a hub node the user of said ranked contacts positioned in the first position of the rank (i.e. the user having the highest value within the ranked or classified users).

The activity unit 20 is responsible for tracking the communication activity, such as communication messages and/or content, of the maintained communications sent/received by the mobile communications terminal 100 to/from the ranked contacts. Therefore, the activity unit 20 can alert the ranked contacts in case of a low activity of the owner.

Moreover, the activity unit 20 may track and calculate a resume of the daily activity of the ranked contacts and sends said resume to the compiling unit 21 to be replayed by the user mobile communications terminal 100 at a defined time. Activity unit 20 may track, generate and save time-based information in relation to the ranked contacts in its calendar.

According to an embodiment, the activity unit 20 alerts the ranked contacts in case their proximity score 500 in relation to the owner changes. Activity unit 20 generates patterns of behaviors of the ranked contacts in communication sources and notifies changes of patterns to the compiling unit 21.

Finally, the compiling unit 21 sets message and/or content outputting rules, stored in a database or memory 22, based on the proximity score 500. The compiling unit 21 compiles messages and/or content only from users within the ranked contacts and outputs them on the user communications terminal interface 23 according to the rules. Preferably, the outputting rules are tied to calendar in the activity unit 20 in order to output messages in a timely manner. For instance, one example of an outputting rule can be that the messages from the hub node will be automatically repeated on an hourly basis unless replied by the owner. Hence, if the message is not replied within a defined time the compiling unit 21 sets outs alerts to all the ranked contacts.

Following are detailed other possible examples of outputting rules that can be used in present invention:

Maintaining Emotional closeness

When there are x days of no communication (e.g. three days) between a user of the ranked contacts and the owner of the mobile communications terminal 100, the compiling unit 21 may send a notification to said user with no communication on a defined period of time.

Soft Emergency

When the activity unit 20 detects emergency levels (proximity score 500 below a threshold), the compiling unit 21 may alert (e.g. send an emergency message) all ranked contacts in order of proximity (position in the rank).

Event Reminder

When one of the ranked contacts put an appointment/event in the calendar, the compiling unit 21 may generate, for instance by playing a voice message, an event appointment reminder and play it back in the mobile communications terminal 100. Optionally, the compiling unit 21 may also play the appointment reminder in the communications terminals of the ranked contacts.

Hub Competition

When the activity unit 20 detects a change in communication patterns between the owner and the ranked contacts, the compiling unit 21 may notify, e.g. by sending a message, the hub node if its calculated proximity score 500 decreases. Moreover, the compiling unit may also notify the three closest ranked contacts to hub node (the 2$^{nd}$, 3$^{rd}$ and 4$^{th}$ position of the rank). Besides that, the compiling unit 21 may also notify the ranked contacts whose position in the rank has changed with respect to hub node.

Activity News

When the activity unit 20 checks ranked contacts' activity in communication sources (places visited, number of emails sent, number of SMS sent, number of links shared on a SN, etc.), the compiling unit 21 may generate an activity message, and play it in the mobile communications terminal 100 at a defined time (e.g. evening), of the five closest ranked contacts.

Weather report of Each Contact

When the activity unit 20 tracks weather changes of the ranked contacts (e.g. when it rains), the compiling unit 21 may notify, e.g. by sending a weather report message, the mobile communications terminal 100 of said weather changes.

Important Recorded or Written Message

When one of the ranked contacts sends a message marked as 'important' to the owner, the compiling unit 21 may repeat the message automatically until a response is sent by the owner.

Reminder to Show Photo Album Group

When one of the ranked contacts shares a photo and/or video media, the compiling unit 21 may save the received photo and/or video media to a family album. Moreover, the compiling unit 21 may also notify the contact that has shared said photo and/or video media when (s)he is at the owner's home.

Automatic Event Generator From Voice Message

When the activity unit 20 detects that a message of the ranked contacts is linked to a calendar date, the compiling unit 21 saves that message in the activity unit 20 and plays it on that calendar date.

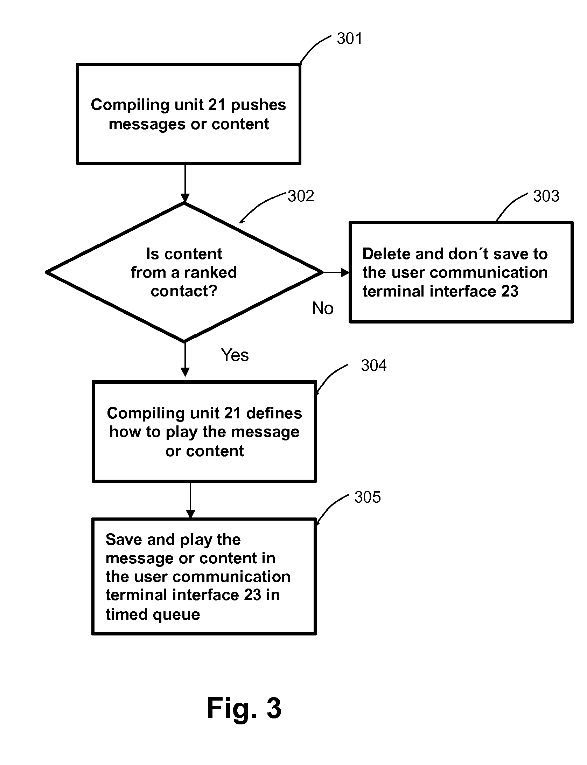

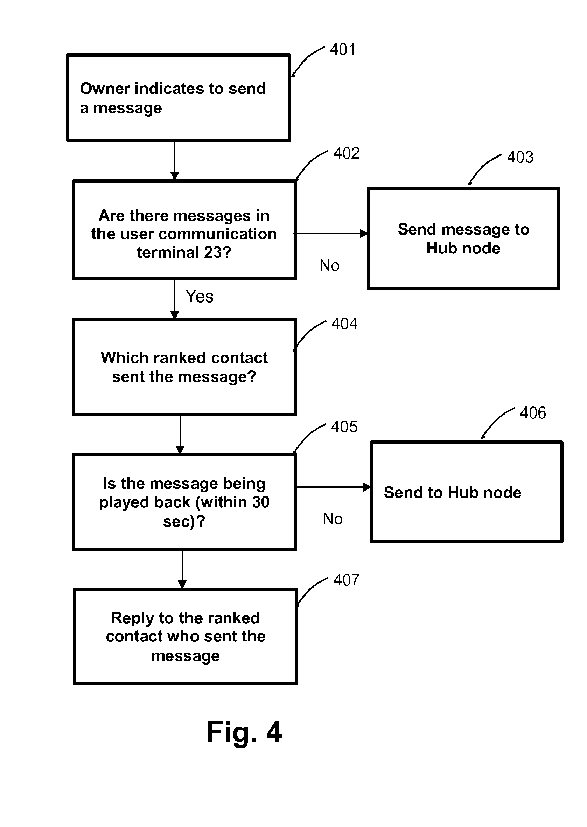

Referring to Figs. 3 and 4, shown therein are two possible embodiments for playing communication messages and/or content in the mobile communications terminal 100 (Fig. 3) and for sending messages and/or content by the mobile communications terminal 100 (Fig. 4).

With reference to Fig. 3, when the compiling unit 21 (step 301) pushes messages and/or content, first it checks if the messages and/or content are from the ranked contacts (step 302). As said before, the compiling unit 21 only compiles messages and/or content from end users within the ranked contacts, hence (step 303) if the message and/or content does not belong from the ranked contacts the compiling unit 21 deletes the message and/or content and does not save it in the user communications terminal interface 23. On contrary (step 304) if the message or content is from one of the ranked contacts, the compiling unit 21 defines how to play the message and/or content and saves and plays the message and/or content in the user communications terminal interface 23 timely.

The user communications terminal interface 23 facilitates a very simple one button press interface with a messaging functionality between the ranked contacts. As shown in Fig. 4, when the owner wants to send a message (step 401), the one send button facilitates replying to last listened messages from the ranked contacts (step 402) or a direct send to hub functionality (step 403) increasing the accessibility between the identified close ranked contacts. Send button thus facilitates via the same interaction/ press of a button both reply to last message and send direct to hub functionality by identifying who of the ranked contacts the message is from (step 404) and who is the hub node. So depending if the owner has recently listened a message (step 405), (s)he will reply to the ranked contact (step 407). If there are messages waiting in the user communications terminal interface 23 but the owner does not want to listen to them/ reply to them (s)he can send a message to hub directly (step 406).

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

**Claims**

1. A mobile communications terminal, comprising:

   - a user communications terminal interface (23); and
   - a communications processing unit (10) configured to receive a calculated proximity score (500), the proximity score

      o providing an estimation of the proximity a first end user owning said mobile communications terminal (100) has with regard to other end users with which the first end user has maintained communications through communication services and during a determined period of time, and
      o being based on parameters related to said maintained communications including type of communication service used and type of communications,

   wherein said communication processing unit (10) includes:

   - a contacts identification unit (19) configured to identify and rank a number of end users of said other end users having a calculated proximity score (500) higher than a given threshold;
   - an activity unit (20) configured to track a communication activity, including communication messages and/or content, of said maintained communications sent/received by the mobile communications terminal (100) to/from said identified and ranked number of end users; and
   - a compiling unit (21) configured to:

      o compile and adapt said tracked communication activity, and
      ◦ output on said user communication terminal interface (23) the compiled and adapted communication activity according to a set of outputting rules.

2. The mobile communications terminal of claim 1, wherein the contacts identification unit (19) is further configured to select as a hub node the end user of said identified and ranked number of end users being positioned in the first position of said rank.

3. The mobile communications terminal of claim 1, wherein the activity unit (20) includes calendar means linked with said set of outputting rules to arrange the adapted and compiled communication activity in a timely manner.

4. The mobile communications terminal of claim 1, wherein said communication messages include at least text messages, the mobile communications terminal (100) further comprising means configured to convert the text messages into voice messages.

5. A computer implemented method for adapting communications on a user mobile communications terminal, the method comprising:

   - obtaining the number of communications that a first end user of communication services has maintained, during a determined period of time and using said mobile communications terminal (100), with each one of other end users of said communication services; and
   - calculating a proximity score (500) for each pair of end users participating in each of said maintained communications, as an estimation of the proximity of the first end user with each one of said other end users, said proximity score (500) being based on parameters related to said communications including type of communication service used and type of communications,

characterized in that the method further comprises:

- identifying and ranking, by a contacts identification unit (19), a number of end users of said other end users having a calculated proximity score (500) higher than a given threshold;
- tracking, by an activity unit (20), communication activity, including communication messages and/or content, of said maintained communications sent/received by the mobile communications terminal (100) to/from said identified and ranked number of end users;
- compiling and adapting, by a compiling unit (21), said tracked communication activity, and outputting, on a user communication terminal interface (23) of said computing device (100), the compiled and adapted communication activity according to a set of outputting rules, said set of outputting rules being executed by the activity unit (20) depending on the communication activity.

6. The method of claim 5, comprising selecting, by the contacts identification unit (19), as a hub node the end user of said identified and ranked number of end users positioned in the first position of said rank.

7. The method of any of previous claims 5 or 6, wherein said set of outputting rules are linked to a calendar of said activity unit (20) to arrange the adapted and compiled communication activity in a timely manner.

8. The method of claim 5, comprising calculating, by the activity unit (20), at least a daily resume of the tracked communication activity and sending the calculated resume to the compiling unit (21).

9. The method of any of previous claims 5 to 8, wherein said set of outputting rules comprises at least one of:

- notify a given user of said identified and ranked number of end users if no communication has been maintained between said given user and the first end user during a determined period of time;
- generate and playing an event reminder in the calendar in case the first end user having received through the calendar an event appointment from at least one of said identified and ranked number of end users;
- notify the hub node in case its position in the rank decreases;
- notify the end users of said identified and ranked number of end users being in the second, third and fourth position of the rank;
- notify the end users of said identified and ranked number of end users whose proximity parameter has changed with respect to the hub node;
- automatically repeating the outputting of a message until a response is sent by the first end user in case said message being send and marked as 'important' by at least one of said identified and ranked number of end users.

10. The method of claim 7 when depending on claim 6, wherein the compiling unit (21) sets out an alarm to all of said identified and ranked number of end users in case a communication message from the hub node being send to the first end user and a reply from the latter has not been received by the hub node within a determined period of time.

11. The method of claim 5, wherein the activity unit (20) alerts the identified and ranked number of end users in case the proximity score (500) each identified and ranked end user has with respect to the first end user changes.

12. The method of claim 5, wherein said communication messages include at least text messages, the method comprising converting the text messages into voice messages.

13. The method of any of previous claims, wherein said communication services includes at least one of a fixed telephone service, a mobile phone service, online services, an email service, chats and/or Internet social networks.

14. The method of any of previous claims, wherein the type of communications includes a call, a SMS, a MMS, a chat, a videoconference, a comment or reply in a social network, and/or an email.

15. A computer program product comprising software program code instructions which when loaded into a computer system controls the computer system to perform each of the methods according to any one of claims 5 to 12.

**Fig. 1**

**Fig. 2**

301

Compiling unit 21 pushes
messages or content

302

Is content
from a ranked
contact?

303

Delete and don´t save to
the user communication
terminal interface 23

No

Yes

304

Compiling unit 21 defines
how to play the message
or content

305

Save and play the
message or content in
the user communication
terminal interface 23 in
timed queue

# Fig. 3

401

Owner indicates to send
a message

402

Are there messages in
the user communication
terminal 23?

403

Send message to
Hub node

No

Yes

404

Which ranked contact
sent the message?

405

Is the message being
played back (within 30
sec)?

406

Send to Hub node

No

407

Reply to the ranked
contact who sent the
message

# Fig. 4

Europäisches
Patentamt

European
Patent Office

Office européen
des brevets

# EUROPEAN SEARCH REPORT

**Application Number**

EP 14 38 2563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/054706 A1 (GRAHAM MARY [US] ET AL) 28 February 2013 (2013-02-28) * abstract; claims 1-20; figures 1-8 * * paragraphs [0012] - [0042] * ----- | 1-15 | INV. G06Q10/10 ADD. H04L12/58 |
| X | EP 2 336 957 A1 (VODAFONE PLC [GB]) 22 June 2011 (2011-06-22) * abstract; claims 1-14; figures 1-4 * * paragraphs [0022] - [0104] * ----- | 1-15 | |
| X | US 2012/149342 A1 (COHEN GABRIEL [US] ET AL) 14 June 2012 (2012-06-14) * abstract; claims 1-25; figures 1a-10 * * paragraphs [0007] - [0012], [0045] - [0196] * ----- | 1-15 | |
| X | US 2012/330980 A1 (RUBIN MARK [US] ET AL) 27 December 2012 (2012-12-27) * abstract; claims 1-22; figures 1-5 * * paragraphs [0012] - [0018], [0031] - [0098] * ----- | 1-15 | |
| A,D | EP 2 610 795 A1 (TELEFONICA SA [ES]) 3 July 2013 (2013-07-03) * the whole document * ----- | 1-15 | TECHNICAL FIELDS SEARCHED (IPC)  G06Q H04L |

The present search report has been drawn up for all claims

| Place of search | Date of completion of the search | Examiner |
|---|---|---|
| The Hague | 25 June 2015 | Streit, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 38 2563

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2015

| Patent document cited in search report | | Publication date | Patent family member(s) | | | Publication date |
|---|---|---|---|---|---|---|
| US 2013054706 | A1 | 28-02-2013 | AU | 2012301481 | A1 | 10-04-2014 |
| | | | CA | 2846753 | A1 | 07-03-2013 |
| | | | CN | 103907364 | A | 02-07-2014 |
| | | | EP | 2752038 | A1 | 09-07-2014 |
| | | | JP | 2014525715 | A | 29-09-2014 |
| | | | KR | 20140063743 | A | 27-05-2014 |
| | | | US | 2013054706 | A1 | 28-02-2013 |
| | | | WO | 2013032619 | A1 | 07-03-2013 |
| EP 2336957 | A1 | 22-06-2011 | EP | 2336957 | A1 | 22-06-2011 |
| | | | GB | 2473952 | A | 30-03-2011 |
| | | | US | 2011238673 | A1 | 29-09-2011 |
| US 2012149342 | A1 | 14-06-2012 | AU | 2011338267 | A1 | 11-07-2013 |
| | | | CN | 103493438 | A | 01-01-2014 |
| | | | EP | 2649762 | A1 | 16-10-2013 |
| | | | JP | 2014501979 | A | 23-01-2014 |
| | | | JP | 2015015038 | A | 22-01-2015 |
| | | | US | 2012149342 | A1 | 14-06-2012 |
| | | | US | 2013041968 | A1 | 14-02-2013 |
| | | | WO | 2012078920 | A1 | 14-06-2012 |
| US 2012330980 | A1 | 27-12-2012 | US | 2012330980 | A1 | 27-12-2012 |
| | | | US | 2014081964 | A1 | 20-03-2014 |
| | | | US | 2014089304 | A1 | 27-03-2014 |
| | | | US | 2014089411 | A1 | 27-03-2014 |
| EP 2610795 | A1 | 03-07-2013 | NONE | | | |

EPO FORM P0459

For more details about this annex : see Official Journal of the European Patent Office, No. 12/82

**EP 3 038 031 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2610795 A1